(19) Europäisches Patentamt
European Patent Office
Office européen des brevets

(11) **EP 4 730 813 A1**

(12) **EUROPEAN PATENT APPLICATION**

(43) Date of publication:
22.04.2026 Bulletin 2026/17

(21) Application number: 24306740.2

(22) Date of filing: 18.10.2024

(51) International Patent Classification (IPC):
$H04N\ 21/234^{(2011.01)}$    $G06T\ 17/00^{(2006.01)}$
$G06T\ 19/00^{(2011.01)}$    $H04N\ 21/81^{(2011.01)}$

(52) Cooperative Patent Classification (CPC):
H04N 21/23412; G06T 13/40; G06T 17/00;
G06T 19/00; H04N 21/816

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(72) Inventors:
• GOSSELIN, Philippe Henri
  35235 THORIGNE-FOUILLARD (FR)
• AVRIL, Quentin
  35830 BETTON (FR)
• KAROUI, Mohamed Amine
  7070 RAS JEBEL (TN)

(74) Representative: Interdigital
Immeuble ZEN 2
845 A, avenue des Champs Blancs
35510 Cesson-Sévigné (FR)

(71) Applicant: InterDigital CE Patent Holdings, SAS
75017 Paris (FR)

(54) **SIGNALING AVATAR JOINT LANDMARKS**

(57)    Methods, apparatus and data stream are provided for managing avatars in a 3D scene. Avatar skeleton comprising joint landmarks are encoded in a data stream. A set of joints landmarks for a given function. This function may be relative to a location of the joint landmarks of the set, like the positioning of the avatar in the 3D scene. The function may also be relative to a weighted sum of a location of the joint landmarks of the set, like the determining of a mass center.

**Figure 1**

## Description

### 1. Technical Field

The present principles generally relate to the domain of the encoding of avatar joint landmarks in 3D scene representations, wherein a joint landmark is a location on an avatar skeleton with a stable semantic meaning.

### 2. Background

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

Scene Description (SD) formats, for example, the current MPEG-I Scene Description which uses the MPEG_node_avatar extension, allows the definition of an avatar model. Thanks to these features, applications can identify meshes that represent an avatar and use them accordingly. For instance, if the avatar is a human body mesh, an application can place it within a scene and allow the user to move it in the world. The "Avatar Json Interchange File Format" (AJIF format) can also encode an avatar model. Joint landmarks are widely used with avatar to provide features. For instance, joint landmarks are used for XR devices calibration or animation capture. They can also be used for registering (for example for retargeting) the skeleton of the avatar against other avatar skeletons.

Using the current scene description and avatar formats, it is possible to signal the joints of avatar skeletons with a string to describe the joint (the "name" property in glTF for instance). In some cases, a more detailed semantic definition can be signaled, for instance using the "type" property of MPEG_node _avatar extension in glTF, which defines the semantic of all joints. Using the AJIF format, it is also possible to define the semantics of each joint using the "mapping" property of a j oint. However, there a lack for a solution for encoding of one or more sets of joint landmarks, where each set attaches joints to a semantic meaning. Indeed, with the current solutions, a new skeleton must be signaled, and the application must know that a skeleton is made for a specific usage. Furthermore, there is also a lack for a solution to signal a joint landmark made as a combination of different joints, as, with current solutions, a j oint landmark must fall on a joint.

### 3. Summary

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

The present principles relate to a methods, apparatus and data stream for managing avatars in a 3D scene. Avatar skeleton comprising joint landmarks are encoded in a data stream. A set of joints landmarks for a given function. This function may be relative to a location of the joint landmarks of the set, like the positioning of the avatar in the 3D scene. The function may also be relative to a weighted sum of a location of the joint landmarks of the set, like the determining of a mass center.

### 4. Brief Description of Drawings

The present disclosure will be better understood, and other specific features and advantages will emerge upon reading the following description, the description making reference to the annexed drawings wherein:

- **Figure 1** illustrates an avatar skeleton comprising 63 joints;
- **Figure 2** illustrates a parsing method for the LOD property;
- **Figure 3** shows an example architecture of a device 30 which may be configured to implement one or several methods for encoding and/or parsing avatar descriptions according to embodiments of the present principles;
- **Figure 4** shows an example of an embodiment of the syntax of a stream when the data are transmitted over a packet-based transmission protocol;
- **Figure 5** illustrates a parsing method 50 for a MPEG_node_avatar property;
- **Figure 6** illustrates a parsing method 60 for a JointSet property according to the present principles;
- **Figure 7** illustrates a parsing method 70 for a Joint property.

### 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

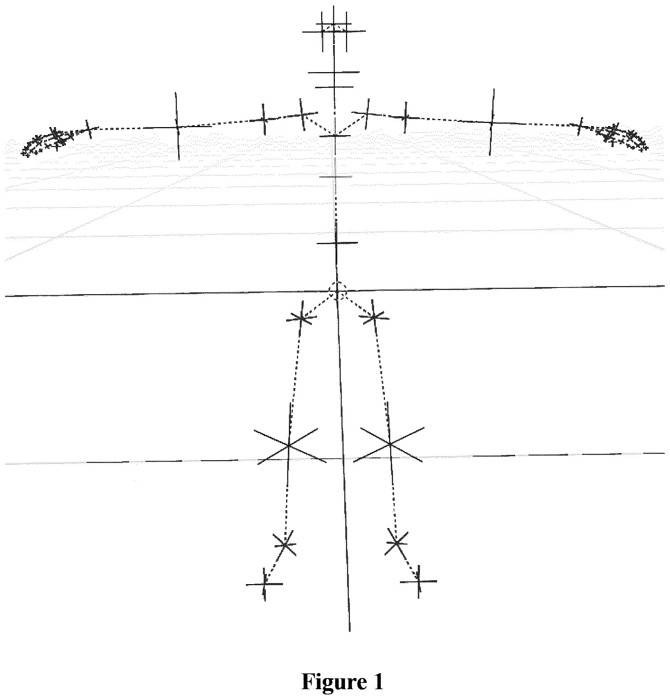

**Figure 1** illustrates an avatar skeleton 10 comprising 63 joints. This avatar skeleton corresponds to the MPEG Morgan avatar model, specified in annex H of the text of ISO/IEC 23090-14 DAM 2: Support for Haptics, Augmented Reality, Avatars, Interactivity, MPEG-I Audio, and Lighting according to the following table.

| Body Hierarchy (25 joints) | Left hand hierarchy (19 joints) | Right hand hierarchy (19 joints) |
|---|---|---|
| Hips | | |
| Spine | | |
| --- Chest | | |
| --- --- UpperChest | | |
| --- --- --- Shoulder_Left | | |
| --- --- --- --- UpperArm_Left | | |
| --- --- --- --- --- LowerArm_Left | *(Hand_Left)* | *(Hand_Right)* |
| --- --- --- --- --- --- Hand_Left | ProximalThumb_Left | ProximalThumb_Right |
| --- --- --- --- --- --- --- *See below* | --- IntermediateThumb_Left | --- IntermediateThumb_Right |
| --- --- --- Shoulder_Right | --- --- DistalThumb_Left | --- --- DistalThumb_Right |
| --- --- --- --- UpperArm_Right | ProximalIndex_Left | ProximalIndex_Right |
| -------------- LowerArm_Right | --- IntermediateIndex_Left | --- IntermediateIndex_Right |

(continued)

| Body Hierarchy (25 joints) | Left hand hierarchy (19 joints) | Right hand hierarchy (19 joints) |
|---|---|---|
| ------------------ Hand_Right | --- --- DistalIndex_Left | --- --- DistalIndex_Right |
| --- --- *See below* | --- --- --- TopIndex _Left | --- --- --- TopIndex_Right |
| --- --- --- Neck | ProximalMiddle_Left | ProximalMiddle_Right |
| --- --- --- --- Head | --- IntermediateMiddle_Left | --- IntermediateMiddle_Right |
| --- --- --- --- --- Eye_Left | --- --- DistalMiddle_Left | --- DistalMiddle_Right |
| --- --- --- --- --- Eye_Right | --- --- --- TopMiddle_Left | --- --- --- TopMiddle_Right |
| --- --- --- --- --- Jaw | ProximalRing_Left | ProximalRing_Right |
| UpperLeg_Left | --- IntermediateRing_Left | --- IntermediateRing_Right |
| --- LowerLeg_Left | --- --- DistalRing_Left | --- --- DistalRing_Right |
| --- --- Foot_Left | --- --- --- TopRing_Left | --- --- --- TopRing_Right |
| --- --- --- Toes_Left | ProximalLittle_Left | ProximalLittle_Right |
| UpperLeg_Right | --- IntermediateLittle_Left | --- IntermediateLittle_Right |
| --- LowerLeg_Right | --- --- DistalLittle_Left | --- --- DistalLittle_Right |
| --- --- Foot_Right | --- --- --- TopLittle_Left | --- --- --- TopLittle_Right |
| --- --- --- Toes_Right | | |

The present principles relate to avatar interoperability, where a user has an avatar encoded into one or more files (e.g. in glTF or AJIF). The avatar files include all the necessary information for an application to implement the expected features: the application must not have to provide extra data or make choices about possible setups. The present principles relate to the use of features based on joint landmarks within an avatar model. For example, a feature can be the prediction of landmark coordinates of a user captured by a webcam, and then the animation of an avatar model mimicking the body movements, based on a transposition of the landmarks' coordinates. According to the present principles, the following elements are signaled in the avatar's description syntax. 1) The signaling of the avatar model. 2) The signaling of one or more joint landmark sets on the avatar model. Each joint landmark is defined given a skeleton and is signaled using one or more joint index, and possibly with associated weights. If the avatar model has several sub models (like level of details (LOD)) and, so, several possible skeletons, it is possible to signal joint landmark sets in each case. 3) For each joint landmark set, the signaling of the joint landmark set semantic type is provided. The joint landmark set semantic type is not related to 3D coordinates or joint location (like indices), and is a formal definition, like "academic:human:15" or "mpeg:avatar:2024:63". These types can be defined by an application or a standard, for instance. 4) For each joint landmark set, the signaling of the joint landmark set description is also provided. For instance, a description can be used in user interfaces to help the user understand which joint landmark set is being used. 5) For each joint landmark, the signaling of the joint landmark semantic type. The joint landmark semantic type is not related to 3D coordinates or joint location (like indices), and is a formal definition, like "the hip". These types can be defined by an application or a standard, for instance. 6) For each joint landmark, the signaling of the joint landmark description. For instance, a description can be used in user interfaces to help the user understand which joint landmark is being used.

In a first example, a syntax is provided for the AJIF according to the present principles. Matching of properties between the avatar model of each LOD with the physical model can be signaled through the addition of a new "landmarks" property in the LOD property :

| Name | Type | Description |
|---|---|---|
| name | string | LOD name. |
| lod | integer | Indicates the level of details. Lower values correspond to a higher level of details. |
| mesh | integer | References a node in the *"nodes"* collection. |
| skeletons | integer [1-*] | List of references to skeletons in the *"skeletons"* collection. |
| controllers | integer [1-*] | List of references to controllers in the *"controllers"* collection. |
| jointSets | jointSet [1-*] | List of joint landmark sets. |

The "jointSets" property contains the list of joint landmark sets as described below.

In a second example, based on gltF, the "MPEG_node_avatar" extension is extended with a "landmarks" property:

| Name | Type | Description |
|------|------|-------------|
| isAvatar | boolean | If true, this node contains the root of an avatar mesh. |
| type | string | The type of the Avatar representation is provided as a URN. |
| mappings | AvatarMapping [1-*] | The mapping between child nodes and semantics. |
| jointSets | jointSet [1-*] | List of joint landmark sets. |

The "jointSets" property contains the list of joint landmark sets as described below.

In both examples and according to the present principles, a joint set of type jointSet may be defined by the following syntax:

| Name | Type | Description | Required |
|------|------|-------------|----------|
| name | string | Joint landmark set name. | No |
| description | string | Joint landmark set description. | No |
| type | string | Joint landmark set type. | Yes |
| joints | Joint [1-*] | List of joint landmarks. | Yes |

The "name" property defines the name of the joint landmark set. It can be used for indexing, for instance, to retrieve the joint landmark set knowing its name. The "description" property describes the joint landmark set. For instance, a description can be used in user interfaces to help the user to understand which joint landmark set is being used. The "type" property defines the joint landmark set semantic type. The landmark set semantic type is not related to 3D coordinates or topology location (like indices), and is a formal definition, like "academic:human:15" or "mpeg:avatar:2024:63". These types can be defined by an application or by a standard, for instance. In most cases, a joint landmark set type also defines the type of each joint landmark in the set. A special value, like "specific", can be used to define a non-standard landmark set type. In this case, the "type" property of each joint landmark in "joints" must be defined. The "joints" property contains the list of joint landmark definitions in the set. The size of this list must be consistent with the type. For instance, if the joint landmark set type has 63 landmarks, the "joints" list must contain 63 items.

A joint of Joint type may be defined by the following syntax:

| Name | Type | Description | Required |
|------|------|-------------|----------|
| name | string | Joint landmark name. | No |
| description | string | Joint landmark description. | No |
| type | string | Joint landmark type. | No |
| skeleton | integer | Skeleton index. | Yes |
| indices | integer [1-*] | Joint indices. | Yes |
| weights | number [1-*] | Weights associated with each joint. | No |

The "name" property defines the name of the joint landmark. It can be used for indexing, for instance, to retrieve the joint landmark knowing its name. The "description" property describes the joint landmark. For instance, a description can be used in user interfaces to help the user understand which joint landmark is being used. The "type" property defines the joint landmark semantic type. The landmark set semantic type is not related to 3D coordinates or topology location (like indices), and is a formal definition, like "the hip" or "mpeg:avatar:landmark:hip". This property is mandatory if the joint landmark is within a joint landmark set with no definitions, like the example of "specific" landmark set type presented above. This property can also be used to override the joint landmark types of a joint landmark set type. The "skeleton" property refers to one of the skeletons (or skins) in the main asset. For example, in AJIF, it is an item of the "skeletons" root property and in glTF, it is an item of the "skins" root property. The "indices" property refers to one or more joints in the skeleton referenced by "skeleton". If there is more than one item in "indices", then coordinates v of the joint landmark are, for example a linear combination of all the coordinates $v_i$ of the joints referenced by "indices":

$$v = \frac{1}{\sum w_i} \sum_i w_i v_i$$

The values of $w_i$ depend on the "weights" property. If not present, then $w_i = 1$. If "weights" is present, then it must have the same number of items as "indices", and each item in "weights" defines the weight $w_i > 0$ for the corresponding joint referenced in "indices".

According to the present principles, it is possible to describe behaviours in the avatar metadata. For instance, a first joint landmark set defines the feet of the avatar. Since Morgan is a human without injuries, there are two joints for each foot. This set can be used to place the avatar on the ground. In the same example, the second joint landmark set defines a kind of mass center for the avatar. There is a single joint landmark, which is a linear combination of all joints, excluding those of the fingers, toes and eyes. Less weight is assigned to arms and legs joints. This set can be used to get a X, Y, Z location of the avatar. The two example usages show how the present principles allow to describe avatar features.

For instance, in AJIF format, the "lods" root property is different. The "name", "lod", "mesh" and "skeletons" are parsed as usual. The "jointSets" property is then parsed and contains two joint landmarks set. The name of the first joint landmark set is "feet" ("name" is "feet"), the description is "Feet" ("description" is "Feet") and the "type" is "urn:mpeg:sd:2023:avatar:feet" ("type" is "urn:mpeg:sd:2023:avatar:feet"). The "joints" list contains the definitions of two joint landmarks. For each landmark, the description, type, skeleton index and joint index are specified.

The name of the second joint landmark set is "massCenter" ("name" is "massCenter"), the description is "Mass Center" ("description" is "Mass Center") and the "type" is "urn:mpeg:sd:2023:avatar:masscenter" ("type" is "urn:mpeg:sd:2023:avatar:masscenter"). The "joints" list contains the definitions of one joint landmark. This joint landmark is a combination of 20 joints (the ones referred to by the "indices" property) with different weights defined by the "weights" property. The weight of joints of indices 2, 3, 4, 5, 7, 8, 9, 19, 20, 21, 22, 42, 43, 44, 45 is 1.0 and the weight of joints indices 11, 12, 13, 14, 15 is 2.0. The joints of indices 11, 12, 13, 14, 15 are the ones of the main part of the body (Chest, Spine, etc.).

```
"lods": [
  {
    "name": "main",
    "lod": 0,
    "mesh": 0,
    "skeletons": [0],
    "jointSets": [
      {
        "name": "feet",
        "description": "Feet",
        "type": "urn:mpeg:sd:2023:avatar: feet",
        "joints": [
          {
            "description": "Left foot",
            "type": "urn:mpeg:sd:2023:avatar:feet:left",
            "skeleton": 0,
            "indices": [5]
          },
          {
            "description": "Right foot",
            "type": "urn:mpeg:sd:2023:avatar:feet:right",
            "skeleton": 0,
            "indices": [9]
          }
        ]
      },
      {
        "name": "massCenter",
        "description": "Mass Center",
        "type": " urn:mpeg:sd:2023:avatar:masscenter ",
        "joints": [
          {
            "description": "Mass Center",
            "type": "urn: m peg: sd: 2023 : avatar: masscenter",
            "skeleton": 0,
            "indices": [
              2, 3, 4, 5, 7, 8, 9, 11, 12, 13, 14, 15, 19, 20, 21, 22, 42, 43, 44, 45
            ],
            "weights": [
              1, 1, 1, 1, 1, 1, 1, 2, 2, 2, 2, 2, 1, 1, 1, 1, 1, 1, 1, 1
            ]
          }
        ]
      }
    ]
```

```
        }
      ]
    }
  ]
}
```

The content is parsed according to "Avatar Json Interchange File Format", but for the first item of the "lods" root property that is parsed according to the present principles. For this item, the "name", "lod", "mesh" and "skeletons" are parsed as AJIF. The "jointSets" property is then parsed and contains two joint landmarks set. The name of the first joint landmark set is "feet" ("name" is "feet"), the description is "Feet" ("description" is "Feet") and the "type" is "urn:mpeg:sd:2023:avatar:feet". The "joints" list contains the definitions of two joint landmarks. For each landmark, the description, type, skeleton index and joint index are specified.

The name of the second joint landmark set is "massCenter" ("name" is "massCenter"), the description is "Mass Center" and the "type" is "urn:mpeg:sd:2023:avatar:masscenter". The "joints" list contains the definitions of one joint landmark. This joint landmark is a combination of 20 joints (the ones referred to by the "indices" property) with different weights defined by the "weights" property. The weight of joints of indices 2, 3, 4, 5, 7, 8, 9, 19, 20, 21, 22, 42, 43, 44, 45 is 1.0 and the weight of joints indices 11, 12, 13, 14, 15 is 2.0. The joints of indices 11, 12, 13, 14, 15 are the ones of the main part of the body (Chest, Spine, etc.).

For the same example using the glTF format, the glTF parser first loads content and parse the MPEG_node_avatar extension. Then, it decodes the MPEG_node_avatar content in the first node. This node is an avatar ("isAvatar" is set to 'true'), the type is the standard one ("type" is "urn:mpeg:sd:2023:avatar"), there is one part: the full body ("mappings" property). The avatar model has a geometry specified by the "mesh" indexed by 0 in the "meshes" array. The "jointSets" property is then parsed and contains two j oint landmark sets. The name of the first j oint landmark set is "feet" ("name" is "feet"), the description is "Feet" ("description" is "Feet") and the "type" is "urn:mpeg:sd:2023:avatar:feet" ("type" is "urn:mpeg: sd:2023 : avatar: feet"). The "joints" list contains the definitions of two joint landmarks. For each landmark, the description, type, skeleton index and joint index are specified. The name of the second joint landmark set is "massCenter" ("name" is "massCenter"), the description is "Mass Center" ("description" is "Mass Center") and the "type" is "urn: m peg: sd :2023 : avatar: masscenter" ("type" is "urn:mpeg:sd:2023:avatar:masscenter"). The "joints" list contains the definitions of one joint landmark. This joint landmark is a combination of 20 joints (the ones referred to by the "indices" property) with different weights defined by the "weights" property. The weight of joints of indices 2, 3, 4, 5, 7, 8, 9, 19, 20, 21, 22, 42, 43, 44, 45 is 1.0 and the weight of joints indices 11, 12, 13, 14, 15 is 2.0. The joints of indices 11, 12, 13, 14, 15 are the ones of the main part of the body (Chest, Spine, etc.).

```
{
  "asset": {
    "generator": "Interdigital R&D France, Video Lab, MetaVideo, Interactive Media,
 Immersive teleprescence",
    "version": "2.0"
  },
  "extensionsUsed": ["MPEG_node_avatar"],
  "accessors": [...],
  "bufferViews": [...],
  "buffers": [...],
  "meshes": [...],
  "nodes": [{
    "extensions": {
      "MPEG_node_avatar": {
        "isAvatar": true,
        "mappings": [{
          "node": 0,
          "path": "full_body"
        }],
        "type": "urn:mpeg: sd:2023 : avatar" ,
        "jointSets": [
          {
            "name": "feet",
            "description": "Feet",
            "type": "urn:mpeg:sd:2023:avatar:feet",
            "joints": [
              {
                "description": "Left foot",
                "type": "urn:mpeg:sd:2023:avatar:feet:left",
                "skeleton": 0,
                "indices": [5]
              },
              {
                "description": "Right foot",
```

```
          "type": "urn:mpeg:sd:2023:avatar:feet:right",
          "skeleton": 0,
          "indices": [9]
        }
      ]
    },
    {
     "name": "massCenter",
     "description": "Mass Center",
     "type": "urn: m peg: sd: 2023 : avatar: masscenter",
     "joints": [
       {
        "description": "Mass Center",
        "type": "urn:mpeg:sd:2023:avatar:masscenter",
        "skeleton": 0,
        "indices": [
         2, 3, 4, 5, 7, 8, 9, 11, 12, 13, 14, 15, 19, 20, 21, 22, 42, 43, 44, 45
        ],
        "weights": [
         1, 1, 1, 1, 1, 1, 1, 2, 2, 2, 2, 2, 1, 1, 1, 1, 1, 1, 1, 1
        ]
       }
      ]
    }
   ]
  }
 },
[...]
```

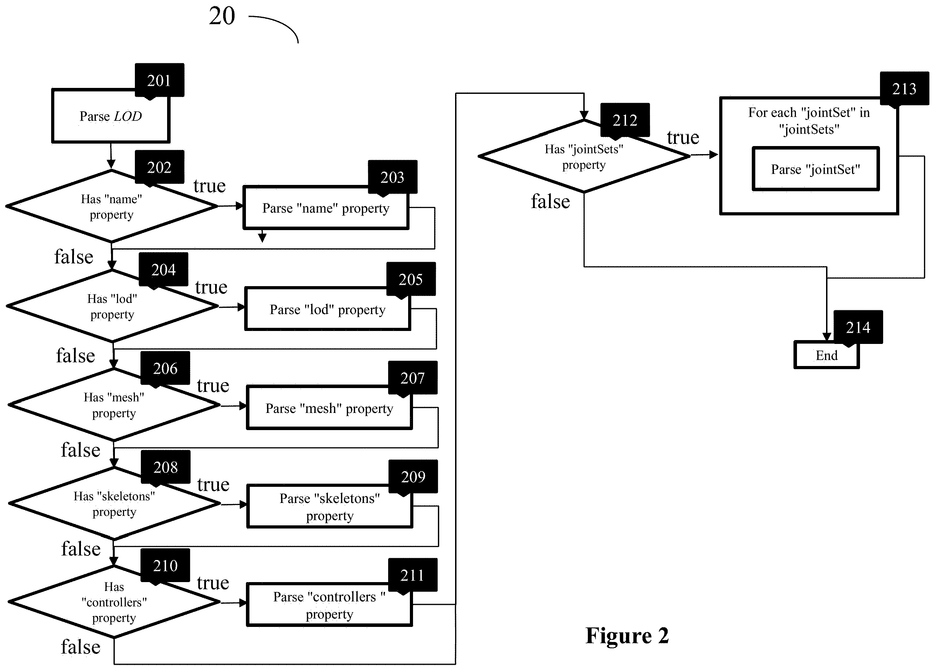

**Figure 2** illustrates a parsing method 20 for the LOD property. At step 201, the process starts. At steps 202 and 203, the "name" property is parsed, if present. At steps 204 and 205, the "lod" property is parsed, if present. At steps 206 and 207, the "mesh" property is parsed, if present. At steps 208 and 209, the "skeletons" property is parsed, if present. At steps 210 and 211, the "controllers" property is parsed, if present. At step 212 and 213, if "jointSets" property is present (212), then each item of "jointSets" is parsed (213). Then , at step 214, the parsing ends with success.

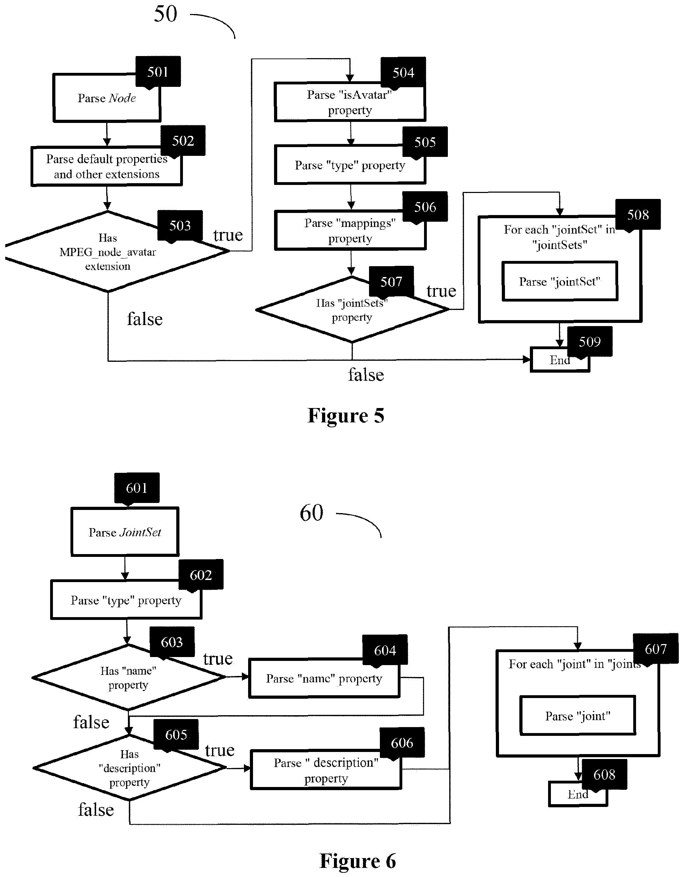

**Figure 5** illustrates a parsing method 50 for a MPEG_node_avatar property. 501: This process happens every time a node is being processed in the glTF file. 502: The glTF loader first decodes the standard properties and possible extensions. 503: If the MPEG_node_avatar is present, the loader parses it, otherwise parsing ends. 504: The "isAvatar" property is parsed (mandatory, error if not present). 505: The "type" property is parsed (mandatory, error if not present). 506: The "mappings" property is parsed (mandatory, error if not present). 507: The "jointSets" property is parsed (508) if present. See the next section for the parsing of the "jointSet" property. 509: The result of the data found in the MPEG_node_avatar extension (if any) is stored in a dedicated structure and should not change the scene.

**Figure 6** illustrates a parsing method 60 for a JointSet property according to the present principles. This processing is not specific to glTF or AJIF (or any other scene description format). 601: This process happens every time a JointSet is being processed. 602: The "type" property is parsed (mandatory, error if not present). 603, 604: The "name" property is parsed, if present. 605, 606: The "description" property is parsed, if present. 607: The "joints" property is parsed (mandatory, error if not present). Each item in the list is parsed (see next section for details). 608: The result of the data found during this parsing is stored in a dedicated structure and should not change the scene.

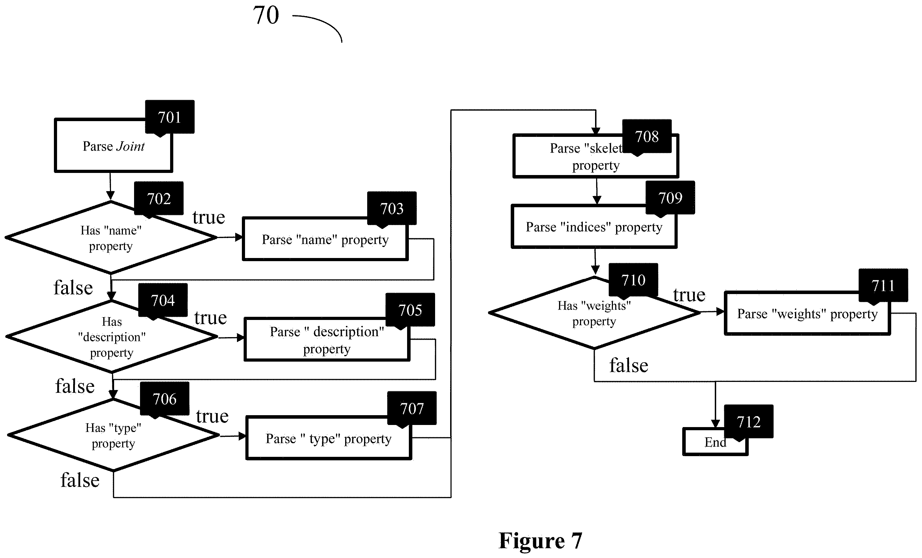

**Figure 7** illustrates a parsing method 70 for a Joint property. 701: This process happens every time a Joint is being processed. 702, 703: The "name" property is parsed, if present. 704, 705: The "description" property is parsed, if present. 706, 707: The "type" property is parsed, if present. 708: The "skeleton" property is parsed (error if not present). The "skeleton" property must refers an existing skeleton in the asset ("skeletons" root property for AJIF or "skins" root property in glTF, for instance). 709: The "indices" is parsed (error if not present). The "indices" property must be a list where each item refers to an existing j oint in the skeleton referenced by the "skeleton" property. 710, 711: The "weights" is parsed, if present. 712: The result of the data found during this parsing is stored in a dedicated structure and should not change the scene.

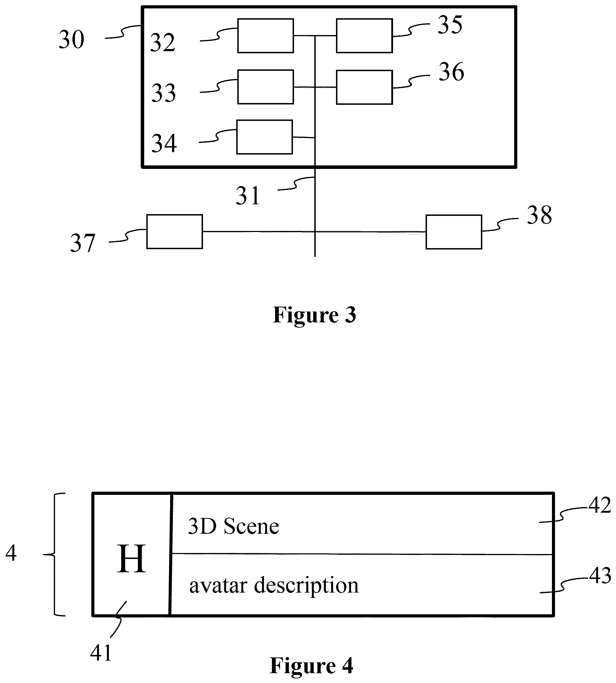

**Figure 3** shows an example architecture of a device 30 which may be configured to implement one or several methods 20, 50, 60 and 70 for encoding and/or parsing avatar descriptions according to embodiments of the present principles. The device is linked with other devices via their bus 31 and/or via I/O interface 36.

Device 30 comprises following elements that are linked together by a data and address bus 31:D

- a processor 32 (or CPU), which is, for example, a DSP (or Digital Signal Processor);
- a ROM (or Read Only Memory) 33;
- a RAM (or Random Access Memory) 34;
- a storage interface 35;

- an I/O interface 36 for reception of data to transmit, from an application; and
- a power supply (not represented in Figure 2), e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 33 comprises at least a program and parameters. The ROM 33 may store algorithms and instructions to perform techniques in accordance with present principles. When switched on, the CPU 32 uploads the program in the RAM and executes the corresponding instructions.

The RAM 34 comprises, in a register, the program executed by the CPU 32 and uploaded after switch-on of the device 30, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 30 is linked, for example via bus 31 to a set of sensors 37 and to a set of rendering devices 38. Sensors 37 may be, for example, cameras, microphones, temperature sensors, Inertial Measurement Units, GPS, hygrometry sensors, IR or UV light sensors or wind sensors. Rendering devices 38 may be, for example, displays, speakers, vibrators, heat, fan, etc.

In accordance with examples, the device 30 is configured to implement a method for processing of triggers related to avatars described in a scene description, and belongs to a set comprising:

- a mobile device;
- a communication device;
- a game device;
- a tablet (or tablet computer);
- a laptop;
- a still picture camera;
- a video camera.

**Figure 4** shows an example of an embodiment of the syntax of a stream when the data are transmitted over a packet-based transmission protocol. Figure 4 shows an example structure 4 of a stream encoding a 3D scene comprising animated objects according to the present principle. The structure consists in a container which organizes the stream in independent elements of syntax. The structure may comprise a header part 41 which is a set of data common to every syntax element of the stream. For example, the header part comprises some of metadata about syntax elements, describing the nature and the role of each of them. The structure comprises a payload comprising an element of syntax 42 and at least one element of syntax 43 (there may be an element of syntax 43 for each part of the scene description for example). Syntax element 42 comprises data representative of the 3D scene. It comprises data necessary to render the objects of the 3D scene (e.g. meshes, textures, lighting, etc.). In particular, syntax element 42 comprises meshes representative of at least an avatar for a user. Element of syntax 43 is a part of the payload of the data stream and comprises the avatar description with joint sets according to the present principles.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method comprising:

   - obtaining an avatar skeleton comprising joint landmarks;
   - determining a set of joints landmarks for a given function; and
   - encoding the avatar skeleton and the set of joint landmarks in a data stream, by providing a skeleton index and joint indices relative to said function.

2. The method of claim 1, wherein said function is relative to a location of said joint landmarks of the set.

3. The method of claim 1 or 2, wherein said function is relative to a weighted sum of a location of said joint landmarks of the set.

4. A device comprising a memory associated to a processor configured for:

   - obtaining a skeleton for at least an avatar comprising joint landmarks;
   - determining a set of joints landmarks for a given function; and
   - encoding the set of joint landmarks in a data stream, by providing a skeleton index and joint indices relative to said function.

5. The device of claim 4, wherein said function is relative to a location of said joint landmarks of the set.

6. The device of claim 4 or 5, wherein said function is relative to a weighted sum of a location of said joint landmarks of the set.

7. A method for managing an avatar, the method comprising:

   - obtaining a description comprising an avatar skeleton and a set of joint landmarks from a data stream, the set of joint landmarks being relative to a function;
   - parsing the description; and
   - initializing a 3D scene according to the avatar skeleton and according to the function of the set of joint landmarks.

8. The method of claim 7, wherein said function is relative to a location of said joint landmarks of the set.

9. The method of claim 6 or 7, wherein said function is relative to a weighted sum of a location of said joint landmarks of the set.

**Figure 1**

**Figure 2**

EP 4 730 813 A1

30 — | 32 — [ ] — [ ] — 35

33 — [ ] — [ ] — 36

34 — [ ]

31 —

37 — [ ] — [ ] — 38

**Figure 3**

4 { | H | 3D Scene | — 42
      |   | avatar description | — 43

41

**Figure 4**

50

**501** Parse *Node*

**502** Parse default properties and other extensions

**503** Has MPEG_node_avatar extension — true →

false

**504** Parse "isAvatar" property

**505** Parse "type" property

**506** Parse "mappings" property

**507** Has "jointSets" property — true →

false

**508** For each "jointSet" in "jointSets"
Parse "jointSet"

**509** End

**Figure 5**

60

**601** Parse *JointSet*

**602** Parse "type" property

**603** Has "name" property — true → **604** Parse "name" property

false

**605** Has "description" property — true → **606** Parse " description" property

false

**607** For each "joint" in "joints"
Parse "joint"

**608** End

**Figure 6**

**Figure 7**

70

- 701 Parse *Joint*
- 702 Has "name" property — true → 703 Parse "name" property; false →
- 704 Has "description" property — true → 705 Parse " description" property; false →
- 706 Has "type" property — true → 707 Parse " type" property; false →
- 708 Parse "skeleton" property → 709 Parse "indices" property → 710 Has "weights" property — true → 711 Parse "weights" property; false → 712 End

Europäisches
Patentamt
European
Patent Office
Office européen
des brevets

# EUROPEAN SEARCH REPORT

**Application Number**

EP 24 30 6740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Potential improvements of ISO/IEC 23090-14 CDAM 2 Support for haptics, augmented reality, avatars, interactivity, MPEG-I audio and lighting", 142. MPEG MEETING; 20230424 - 20230428; ANTALYA; (MOTION PICTURE EXPERT GROUP OR ISO/IEC JTC1/SC29/WG11), , no. n22603 16 July 2023 (2023-07-16), XP030311078, Retrieved from the Internet: URL:https://dms.mpeg.expert/doc_end_user/documents/142_Antalya/wg11/MDS22603_WG03_N00861.zip MDS22603_PotImprov_CDAM2_23090-14_Phase2_c1.docx [retrieved on 2023-07-16] * pages 59-70 * | 1-9 | INV. H04N21/234 G06T17/00 G06T19/00 H04N21/81 |
| A | JOAO REGATEIRO (INTERDIGITAL) ET AL: "[42] [SD] - Avatar Representation and Coding Format Specification", 147. MPEG MEETING; 20240715 - 20240719; SAPPORO; (MOTION PICTURE EXPERT GROUP OR ISO/IEC JTC1/SC29/WG11), , no. m68266 24 June 2024 (2024-06-24), XP030319943, Retrieved from the Internet: URL:https://dms.mpeg.expert/doc_end_user/documents/147_Sapporo/wg11/m68266-v1-m68266_avatar_new_working_item.zip m68266_avatar_new_working_item.docx [retrieved on 2024-06-24] * the whole document * | 1-9 | |
| A | US 2023/260215 A1 (HELLGE CORNELIUS [DE] ET AL) 17 August 2023 (2023-08-17) * the whole document * | 1-9 | |

**TECHNICAL FIELDS SEARCHED (IPC)**

H04N
G06T

The present search report has been drawn up for all claims

| Place of search | Date of completion of the search | Examiner |
|---|---|---|
| The Hague | 3 February 2025 | Troya Chinchilla, A |

EPO FORM 1503 03.82 (P04C01)

## ANNEX TO THE EUROPEAN SEARCH REPORT
## ON EUROPEAN PATENT APPLICATION NO.

EP 24 30 6740

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2025

| Patent document cited in search report | Publication date | Patent family member(s) | | Publication date |
|---|---|---|---|---|
| US 2023260215 A1 | 17-08-2023 | CN | 116583881 A | 11-08-2023 |
| | | EP | 4222711 A1 | 09-08-2023 |
| | | KR | 20230079256 A | 05-06-2023 |
| | | US | 2023260215 A1 | 17-08-2023 |
| | | WO | 2022069616 A1 | 07-04-2022 |

EPO FORM P0459

For more details about this annex : see Official Journal of the European Patent Office, No. 12/82